# EUROPEAN PATENT APPLICATION

(11) **EP 4 549 626 A1**
(43) Date of publication of application: **07.05.2025**
(21) Application number: 23831521.2
(22) Date of filing: 28.06.2023
(51) Int. Cl.: C25B 15/00, C25B 1/46, C25B 9/00, C25B 9/77, C25B 11/052, C25B 11/081

(54) **DEVICE AND METHOD**

(30) Priority: 30.06.2022 JP 2022105338
(71) Applicant: Asahi Kasei Kabushiki Kaisha, Tokyo 1000006 (JP)
(72) Inventor: WADA, Yoshifumi, Tokyo 100-0006 (JP); KAWAI, Tomomi, Tokyo 100-0006 (JP); FUNAKAWA, Akiyasu, Tokyo 100-0006 (JP); KADO, Yoshifumi, Tokyo 100-0006 (JP)
(74) Representative: dompatent von Kreisler Selting Werner - Partnerschaft von Patent- und Rechtsanwälten mbB
(86) International application number: PCT/JP2023/024006
(87) International publication number: WO 2024/005081

(57) **Abstract**

It is an object to provide an apparatus and a method for assessing a remaining amount of rare metals included in an electrode included in an electrolyzer in a non-invasive manner. The apparatus includes a remaining amount predicting unit that predicts, based on operation history information of an electrolyzer including one or more electrolytic cells, a remaining amount of precious metal coating on an electrode included in the electrolytic cells of the electrolyzer.

## Description

### Technical Field

The present invention relates to an apparatus and a method.

### Background Art

Although ion exchange membrane methods using an electrolyzer equipped with an ion exchange membrane are mainly used for electrolysis, reduction in the amount of energy consumption or, in other words, reduction in electrolysis voltage is a major issue. For example, using the electrolyzer described in Patent Literature 1 enables power use to be significantly reduced.

In addition, in recent years, development of technology is ongoing to reduce power consumption in order to solve problems of global warming caused by greenhouse gases such as carbon dioxide, the depletion of fossil fuel reserves, and the like.

For example, focusing on electrodes for electrolysis, electrode coating compositions that promote anodic or cathodic reactions are being developed and electrode shapes and the like are being studied. (for example, refer to Patent Literature 2).

### Citation List

### Patent Literature

Patent Literature 1: Japanese Patent No. 4453973
Patent Literature 2: Japanese Patent No. 6670948

### Summary of Invention

### Technical Problem

Recently, the reuse of rare metals is being considered from the perspective of sustainability including reducing environmental impact. Rare metals are also used in electrodes of electrolyzers and there is a need for more efficient recovery of rare metals from electrodes in aging electrolyzers. In particular, while recovery of resources generally tend to be costly and repeated recovery and reuse may inflate costs, there is a need for a technique that can make recovery and reuse of rare resources sustainable.

The present invention has been made in consideration of the problem described above and an object thereof is to provide an apparatus and a method for assessing a remaining amount of rare metals included in an electrode included in an electrolyzer in a non-invasive manner.

### Solution to Problem

Specifically, the present invention provides the following.
[1] An apparatus, including:
   a remaining amount predicting unit that predicts, based on operation history information of an electrolyzer including one or more electrolytic cells, a remaining amount of precious metal coating on an electrode included in the electrolytic cells.
[2] The apparatus according to [1], wherein
   the remaining amount of precious metal coating includes a remaining amount of coating of a precious metal selected from the group consisting of ruthenium, rhodium, palladium, osmium, iridium, and platinum.
[3] The apparatus according to [1] or [2], wherein
   the remaining amount predicting unit predicts the remaining amount of precious metal coating on the electrode included in the individual electrolytic cell, an average remaining amount of precious metal coating on respective electrodes included in the electrolytic cell included in the electrolyzer, and/or a total remaining amount of precious metal coating on all electrodes.
[4] The apparatus according to any one of [1] to [3], wherein
   the remaining amount predicting unit predicts, based on the operation history information of the electrolyzer and data of an actual measurement of the remaining amount of precious metal coating on the electrode included in a part of the electrolytic cells, the remaining amount of precious metal coating on the electrode included in another of the electrolytic cells.
[5] The apparatus according to [4], wherein
   the actual measurement data includes at least actual measurement data of the remaining amount of precious metal coating on the electrode included in the electrolytic cells positioned at an end and in a central part of the electrolyzer.
[6] The apparatus according to [4] or [5], wherein
   the actual measurement data includes X-ray fluorescence analysis data, inductively-coupled plasma emission analysis data, X-ray diffraction data, or X-ray photoelectron spectroscopy analysis data of the electrode included in the electrolytic cell.
[7] The apparatus according to any one of [1] to [6], wherein
   the operation history information includes information related to a reverse current, and
   the remaining amount predicting unit predicts the remaining amount of precious metal coating on a cathode based on the operation history information.
[8] The apparatus according to any one of [1] to [7], wherein
   the operation history information includes information related to an impurity of an electrolytic solution, and
   the remaining amount predicting unit predicts the remaining amount of precious metal coating on an anode based on the operation history information.
[9] The apparatus according to any one of [1] to [8], wherein
   the remaining amount predicting unit performs a prediction of the remaining amount of precious metal coating using a trained model generated by machine learning processing based on training data that includes information related to an operation history and information related to a remaining amount of precious metal coating on an electrode included in each electrolytic cell in an electrolyzer that has gone through the operation history.
[10] The apparatus according to any one of [1] to [9], further including
   an assessing unit that assesses a value of recovering precious metals based on the predicted remaining amount of precious metal coating and a cost of recovering precious metals from the electrode.
[11] The apparatus according to any one of [1] to [10], further including
   an operation suggesting unit that suggests an operation condition of the electrolyzer, wherein
   the operation suggesting unit suggests the operation condition for causing current efficiency to increase based on the remaining amount of precious metal coating, and
   the operation condition includes a voltage condition and a flow rate condition of the electrolytic solution.
[12] The apparatus according to any one of [1] to [11], further including
   a stop suggesting unit that suggests a stop condition of the electrolyzer, wherein
   the stop suggesting unit suggests, based on the remaining amount of precious metal coating, the stop condition that makes it difficult to reduce the remaining amount of precious metal coating, and
   the stop condition includes an attenuation condition of a current and/or an increase condition of a flow rate of an electrolytic solution.
[13] The apparatus according to any one of [1] to [12], wherein
   the electrolyzer includes a plurality of the electrolytic cells, and the apparatus further includes
   a position change suggesting unit that suggests, based on the remaining amount of precious metal coating, a change in a position in the electrolyzer of the electrolytic cell of which the remaining amount of precious metal coating is relatively high and the electrolytic cell of which the remaining amount of precious metal coating is relatively low.
[14] An apparatus, including:
   a remaining amount predicting unit that individually predicts, based on operation history information of an electrolyzer including a plurality of electrolytic cells including information related to a reverse current and information related to an impurity of an electrolytic solution, a remaining amount of precious metal coating on an electrode included in the electrolytic cells; and
   an assessing unit that assesses a value of recovering precious metals for each electrolytic cell based on the remaining amount of precious metal coating, wherein
   the assessing unit specifies an electrolytic cell that is an object to be discarded or an object from which precious metals are to be recovered and displays the assessment result.
[15] A method, in which an apparatus
   executes, based on operation history information of an electrolyzer including one or more electrolytic cells, processing of predicting a remaining amount of precious metal coating on an electrode included in the electrolytic cells.
[16] A program, causing an apparatus to
   execute, based on operation history information of an electrolyzer including one or more electrolytic cells, processing of predicting a remaining amount of precious metal coating on an electrode included in the electrolytic cells.

### Advantageous Effect of Invention

According to the present invention, an apparatus and a method that enable rare metals to be more efficiently recovered from an electrode of an electrolyzer can be provided.

### Brief Description of Drawings

[Figure 1A] Figure 1A is a sectional schematic view showing an example of an electrolytic cell according to the present embodiment.
[Figure 1B] Figure 1B is an explanatory diagram of a case where two of the electrolytic cells shown in Figure 1A are connected in series.
[Figure 2A] Figure 2A is an explanatory diagram showing an example of an electrolyzer according to the present embodiment.
[Figure 2B] Figure 2B is an explanatory diagram showing an example of a step of assembling the electrolyzer according to the present embodiment.
[Figure 3] Figure 3 is an example of a block diagram showing a functional configuration of an apparatus according to the present embodiment.
[Figure 4A] Figure 4A is a schematic diagram showing an example of electrolyzer data according to the present embodiment.
[Figure 4B] Figure 4B is a schematic diagram showing an example of electrolyzer data according to the present embodiment.
[Figure 5A] Figure 5A is a schematic diagram showing a remaining amount of metal of an electrode for each electrolytic cell of a bipolar electrolyzer in an initial stage.
[Figure 5B] Figure 5B is a schematic diagram showing a remaining amount of metal of an electrode for each electrolytic cell of a bipolar electrolyzer in an intermediate stage.
[Figure 5C] Figure 5C is a schematic diagram showing a remaining amount of metal of an electrode for each electrolytic cell of a bipolar electrolyzer in a late stage.
[Figure 5D] Figure 5D is a schematic diagram showing a remaining amount of metal of an electrode for each electrolytic cell of a bipolar electrolyzer including a reverse current absorber or the like.
[Figure 5E] Figure 5E is a schematic diagram showing a remaining amount of metal of an electrode for each electrolytic cell of a bipolar electrolyzer when there is a reverse current.
[Figure 6A] Figure 6A is a schematic diagram showing an example of training data according to the present embodiment.
[Figure 6B] Figure 6B is a schematic diagram showing an example of training data according to the present embodiment.
[Figure 7] Figure 7 is a sequence diagram showing an example of processing executed by the apparatus according to the present embodiment.

### Description of Embodiment

Hereinafter, while an embodiment of the present invention (hereinafter, referred to as the "present embodiment") will be described in detail, it is to be understood that the present invention is not limited thereto and various modifications can be made without departing from the gist of the invention.

### 1. Electrolytic cell

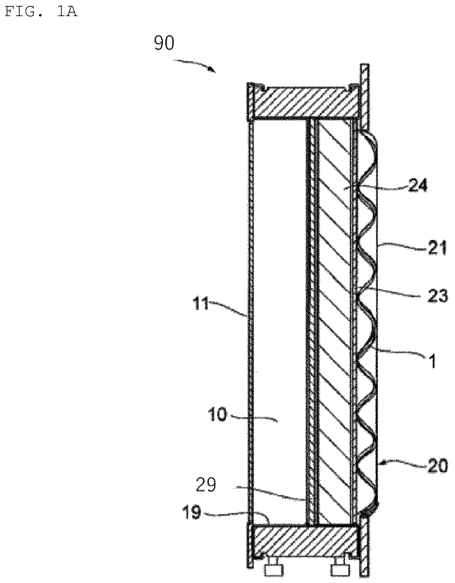

Figure 1A shows an example of an electrolytic cell that constitutes an electrolyzer according to the present embodiment as a sectional schematic view. An electrolytic cell 90 includes an anode chamber 10, a cathode chamber 20, a partition wall 29 that partitions the anode chamber 10 and cathode chamber 20, an anode 11 installed in the anode chamber 10, and a cathode 21 installed in the cathode chamber 20. The anode 11 and the cathode 21 belonging to one electrolytic cell 90 are electrically connected to each other.

In addition, in the example shown in Figure 1A, the cathode chamber 20 further includes the cathode 21 installed in the cathode chamber 20, a current collector 23, a support body 24 that supports the current collector, and an elastic mat 1. The elastic mat 1 is installed between the current collector 23 and the cathode 21. The support body 24 is installed between the current collector 23 and the partition wall 29. The current collector 23 is electrically connected to the cathode 21 via the elastic mat 1. The partition wall 29 is electrically connected to the current collector 23 via the support body 24. Therefore, the partition wall 29, the support body 24, the current collector 23, the elastic mat 1, and the cathode 21 are electrically connected. The cathode 21 and a reverse current absorber may be directly connected or indirectly connected to each other via a current collector, a support body, a metal elastic body, a partition wall, or the like. An entire surface of the cathode 21 is preferably coated with a catalyst layer for a reduction reaction. In addition, a mode of electric connection may be a mode in which the partition wall 29 and the support body 24, the support body 24 and the current collector 23, and the current collector 23 and the elastic mat 1 are respectively directly mounted and the cathode 21 is laminated on the elastic mat 1. Examples of a method of directly mounting the respective constituent members to each other include welding and folding described earlier.

Installing the elastic mat 1 between the current collector 23 and the cathode 21 enables each cathode 21 of a plurality of electrolytic cells 90 connected in series to be pressed against an ion exchange membrane 2, a distance between each anode 11 and each cathode 21 to be shortened, and a voltage applied across the plurality of electrolytic cells 90 connected in series to be reduced. The reduction in voltage enables an amount of electricity consumption to be reduced. With the elastic mat according to the present embodiment, since pressure can be applied to the ion exchange membrane at a suitable surface pressure as described above, a zero-gap configuration can be realized while maintaining current efficiency and damage to the ion exchange membrane can also be prevented in a preferable manner.

The cathode can be directly stacked on the elastic mat, or a configuration may be adopted in which the cathode is stacked via another conductive member. As a cathode that can be used for a zero-gap configuration, a cathode with a thin wire diameter and a small mesh count is most preferable since the cathode is also more flexible. Although there is no particular limit to a wire material constituting such a cathode, a wire material with a wire diameter of 0.1 to 0.5 mm and a mesh opening in the range of around 20 to 80 mesh can also be used.

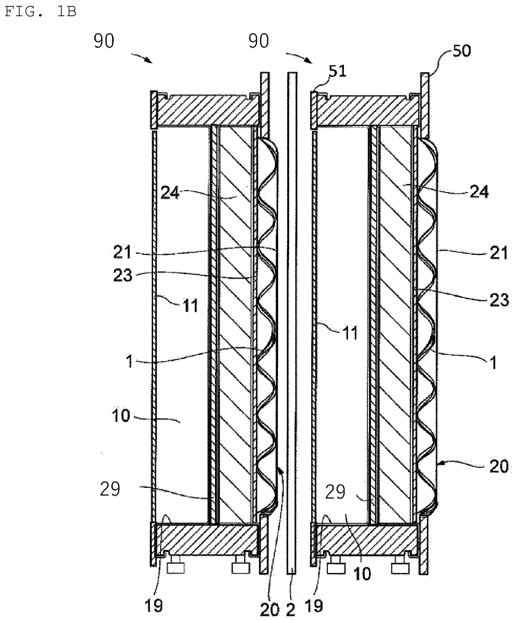

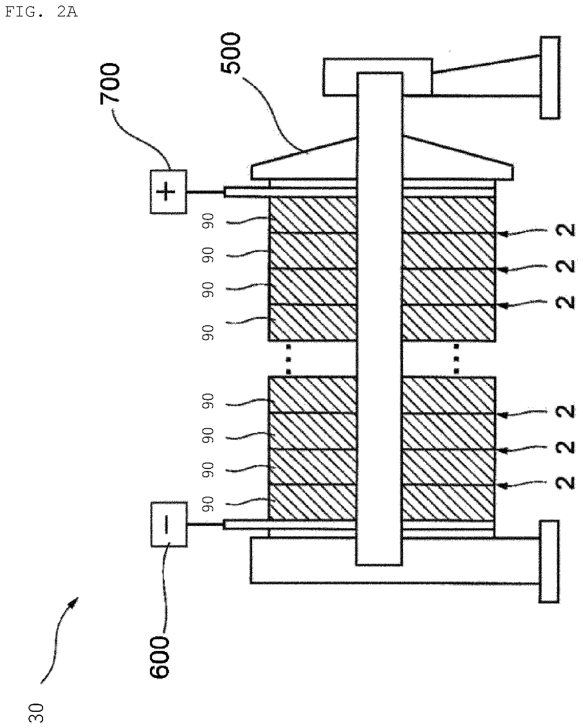

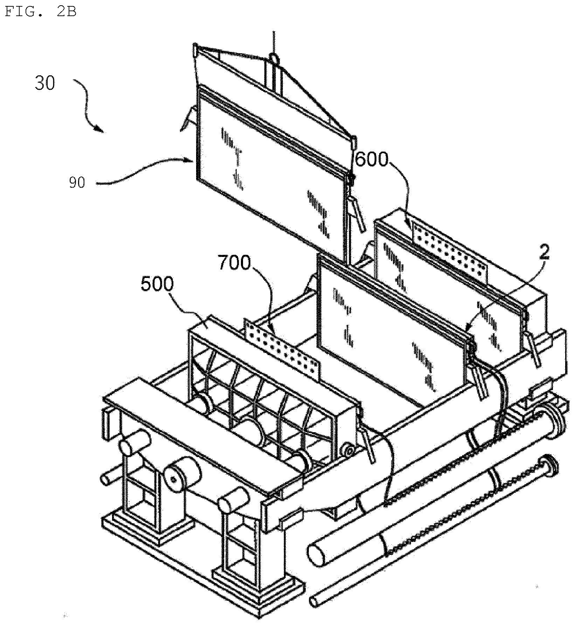

Figure 1B is a sectional view of two adjacent electrolytic cells 90 in an electrolyzer 4 according to the present embodiment. Figure 2A shows an electrolyzer 30. Figure 2B shows a step of assembling the electrolyzer 30.

As shown in Figure 1B, the electrolytic cell 90, the ion exchange membrane 2, and the electrolytic cell 90 are arranged in series in this order. In the electrolyzer, the ion exchange membrane 2 is arranged between the anode chamber of one electrolytic cell 90 and the cathode chamber of the other electrolytic cell 90 among the two adjacent electrolytic cells. In other words, the anode chamber 10 of the electrolytic cell 90 and the cathode chamber 20 of the electrolytic cell 90 adjacent thereto are separated by the ion exchange membrane 2.

As shown in Figure 2A, the electrolyzer 30 includes a plurality of electrolytic cells 90 connected in series via the ion exchange membrane 2. In other words, the electrolyzer 30 is a bipolar electrolyzer including a plurality of electrolytic cells 90 arranged in series and the ion exchange membrane 2 arranged between adjacent electrolytic cells 90. As shown in Figure 2B, the electrolyzer 30 is assembled by arranging a plurality of the electrolytic cells 90 in series via the ion exchange membrane 2 and coupling the electrolytic cells 90 by a press machine 500.

The electrolyzer 30 includes an anode terminal 700 and a cathode terminal 600 that are connected to a power supply. The anode 11 of the electrolytic cell 90 at the endmost position among the plurality of electrolytic cells 90 connected in series in the electrolyzer 30 is electrically connected to the anode terminal 700. The cathode 21 of the electrolytic cell 2 positioned at the end opposite to the anode terminal 700 among the plurality of electrolytic cells 90 connected in series in the electrolyzer 30 is electrically connected to the cathode terminal 600. A current during electrolysis flows from the side of the anode terminal 700 via the anode and the cathode of each electrolytic cell 90 toward the cathode terminal 600. Note that an electrolytic cell including only an anode chamber (anode terminal cell) and an electrolytic cell including only a cathode chamber (cathode terminal cell) may be arranged at both ends of the coupled electrolytic cells 90. In this case, the anode terminal 700 is connected to the anode terminal cell arranged at the one end and the cathode terminal 600 is connected to the cathode terminal cell arranged at the other end.

When performing electrolysis of saline water, saline water is supplied to each anode chamber 10 and pure water or a low-concentration sodium hydroxide solution is supplied to the cathode chamber 20. Each liquid is supplied from an electrolytic solution supply pipe (not shown in the drawing) to each electrolytic cell 90 via an electrolytic solution supply hose (not shown in the drawing). The electrolytic solution and products of electrolysis are recovered by an electrolytic solution recovery pipe (not shown in the drawing). In electrolysis, sodium ions in the saline water move from the anode chamber 10 of one electrolytic cell 90 through the ion exchange membrane 2 to the cathode chamber 20 of the adjacent electrolytic cell 90. Therefore, a current in electrolysis is to flow in a direction in which the electrolytic cells 90 are coupled in series. In other words, a current flows from the anode chamber 10 toward the cathode chamber 20 via the ion exchange membrane 2. Due to the electrolysis of saline water, chlorine gas is produced on the side of the anode 11 and sodium hydroxide (solute) and hydrogen gas are produced on the side of the cathode 21.

In addition, there are two types of alkaline water electrolysis: one using an anion exchange membrane and the other using a cation exchange membrane. In the type using an anion exchange membrane, alkali metal ions (K⁺ or Na⁺) move from the anode chamber 10 to the cathode chamber 20. On the other hand, in the type using a cation exchange membrane, hydroxide ions (OH⁻) move from the cathode chamber 20 to the anode chamber 10.

### 2. Apparatus

An amount of precious metal coating on an electrode included in an electrolytic cell gradually decreases with the operation of an electrolytic apparatus. An extent of decrease thereof is affected by operating conditions such as an operating time, an operating voltage, and an amount of impurities included in the electrolytic solution, an occurrence of reverse currents, and the like. In addition, in an electrolytic apparatus equipped with a bipolar electrolyzer in which a large number of electrolyzers are connected to each other, since a magnitude of a generated reverse current varies depending on a position of an electrolytic cell in the electrolyzers, the extent of decrease in the amount of precious metal coating also varies depending on the position of the electrolytic cell in the electrolyzers.

An apparatus according to the present embodiment includes a remaining amount predicting unit that predicts, based on operation history information of an electrolyzer including one or more electrolytic cells, a remaining amount of precious metal coating on an electrode included in the electrolytic cells. Accordingly, a remaining amount of rare metals included in an electrode included in an electrolyzer can be assessed in a non-invasive manner. In addition, in an electrolytic apparatus including a bipolar electrolyzer, a remaining amount of precious metal coating on an electrode included in each of the large number of electrolyzers can be predicted.

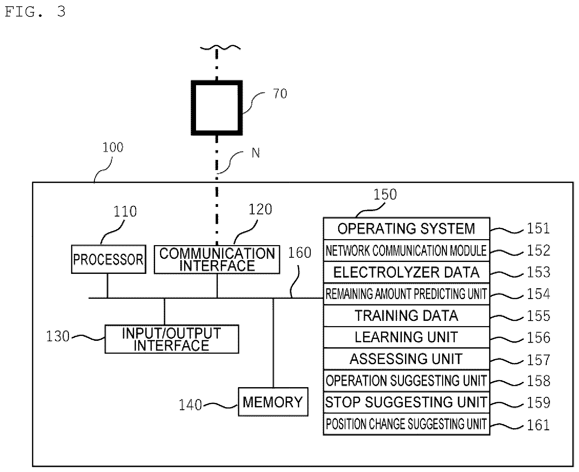

In the present embodiment, for example, as shown in Figure 3, an apparatus 100 may be an apparatus connected to an electrolytic apparatus 10 via a wired or wireless network N or the apparatus 100 and the electrolytic apparatus 10 may be configured as one apparatus. In addition, the apparatus 100 may be configured to perform at least a part of processing of the functional units shown in Figure 3 using another apparatus such as a server connected by the network N.

### 2.1. Configuration

A configuration of hardware of the apparatus 100 will be described with reference to Figure 3. For example, the apparatus 100 includes a processor 110, a communication interface 120, an input/output interface 130, a memory 140, a storage 150, and one or more communication buses 160 for interconnecting these components.

The processor 110 executes processing, a function, or a method to be realized by a code or instructions contained in a program stored in the storage 150. By way of example and not limitation, the processor 110 includes one or more central processing units (CPUs), an MPU (micro processing unit), a GPU (graphics processing unit), a microprocessor, a processor core, a multiprocessor, an ASIC (application-specific integrated circuit), an FPGA (field programmable gate array), or the like and may realize each of processing, functions, or methods disclosed in each embodiment using a logical circuit (hardware) or a dedicated circuit formed on an integrated circuit (IC chip or an LSI (large scale integration)) or the like.

The communication interface 120 transmits/receives various kinds of data to and from other apparatuses via a network. The communication may be executed in either a wired or wireless manner and any communication protocol may be used as long as mutual communication can be executed. For example, the communication interface 120 is implemented as hardware such as a network adapter, various kinds of communication software, or a combination thereof.

By way of example and not limitation, the network may be an ad hoc network, an intranet, an extranet, a virtual private network (VPN), a local area network (LAN), a wireless LAN (WLAN), a wide area network (WAN), a wireless WAN (WWAN), a metropolitan area network (MAN), a part of the Internet, a part of a public switched telephone network (PSTN), a mobile phone network, ISDNs (integrated service digital networks), wireless LANs, LTE (long term evolution), CDMA (code division multiple access), Bluetooth (registered trademark), satellite communication, or the like or a combination of such networks. The network may include one or more networks.

The input/output interface 130 includes an input apparatus for inputting various operations to the apparatus 100 and an output apparatus for outputting a processing result processed by the apparatus 100. For example, the input/output interface 130 includes information input apparatuses such as a keyboard, a mouse, and a touch panel and information output apparatuses such as a display. The apparatus 100 may accept a predetermined input by connecting an external input/output interface 130.

For example, the apparatus 100 may be connected by a wired or a wireless network N to an X-ray fluorescence spectrometer, an inductively-coupled plasma emission spectrometer, an X-ray diffractometer, or an X-ray photoelectron spectrometer as the external input/output interface 130. Accordingly, actual measurement data of the remaining amount of precious metal coating on an electrode can be directly and readily measured and the apparatus 100 can acquire the measured data.

The memory 140 temporarily stores a program loaded from the storage 150 and provides the processor 110 with a work area. The memory 140 also temporarily stores various kinds of data generated while the processor 110 is executing the program. For example, the memory 140 may be a high-speed random access memory such as a DRAM, an SRAM, a DDR RAM, or other random access solid-state memories or a combination of such memories may be used.

The storage 150 stores a program, various functional units, and various kinds of data. For example, the storage 150 may be one or more magnetic disk storage apparatuses, an optical disk storage apparatus, a flash memory device, or other non-volatile solid-state storage apparatuses or a combination of such storage apparatuses may be used. Other examples of the storage 150 include one or more storage apparatuses installed at a remote location from the processor 110.

In an embodiment of the present invention, the storage 150 stores a program, functional units, and a data structure or a subset thereof. By having the processor 110 execute instructions included in the program stored in the storage 150, as shown in Figure 3, the apparatus 100 is configured to function as a remaining amount predicting unit 154, a learning unit 156, an assessing unit 157, an operation suggesting unit 158, a stop suggesting unit 159, and a position change suggesting unit 161.

For example, an operating system 151 includes procedures for processing various basic system services and for executing tasks using hardware.

For example, a network communicating unit 152 is used to connect the apparatus 100 to other computers via the communication interface 120 and one or more communication networks such as the Internet, other wide area networks, a local area network, and a metropolitan area network.

### 2.1.1. Electrolyzer data

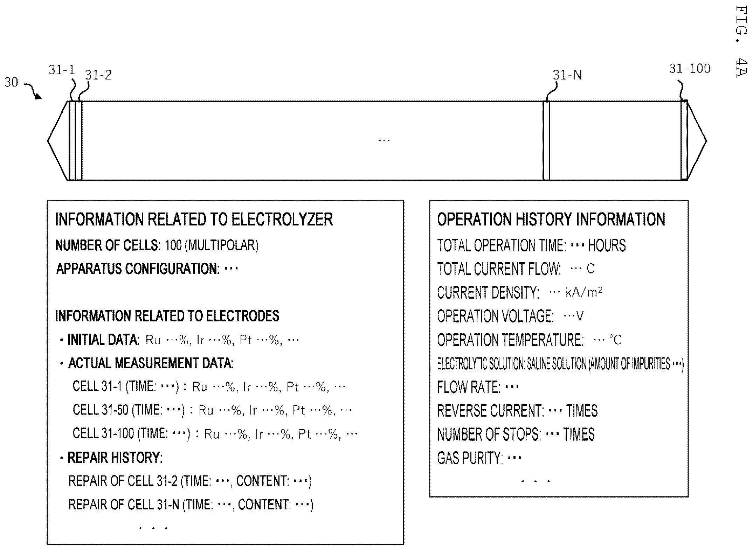

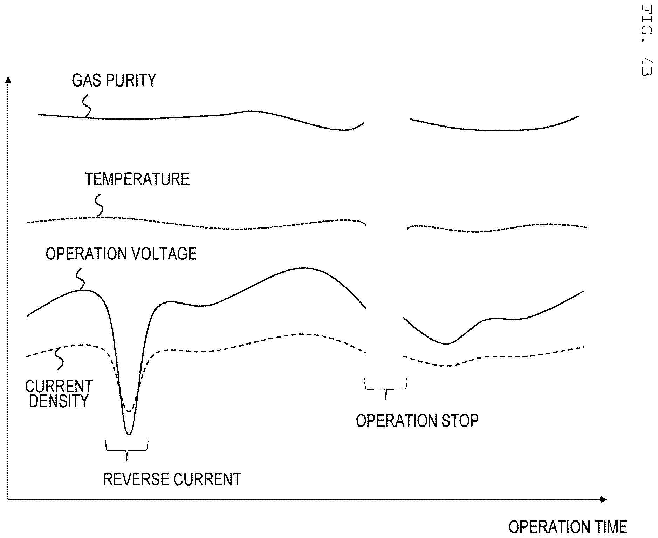

As electrolyzer data 153, information related to the electrolyzer 30 or operation history information of the electrolyzer 30 may be stored for each electrolyzer. The electrolyzer data 153 stored in the storage 150 will be described with reference to Figures 4A and 4B.

Although not particularly limited, examples of information related to the electrolyzer 30 include the number of electrolytic cells 31 included in the electrolyzer 30, an apparatus configuration of the electrolytic apparatus 10, and information related to electrodes.

Although not particularly limited, examples of information related to an electrode include initial data of metal species and a loading amount thereof included in the electrode prior to operation, actual measurement data of metal species and a loading amount thereof included in the electrode during operation, and a repair history.

For example, the initial data may be information acquired from an electrode manufacturer. In addition, the actual measurement data may be data acquired from the input/output interface 130 of an X-ray fluorescence spectrometer or the like and may include X-ray fluorescence analysis data, inductively-coupled plasma emission analysis data, X-ray diffraction data, or X-ray photoelectron spectroscopy analysis data of the electrode included in the electrolytic cell.

Although a method of quantifying precious metals from the pieces of analysis data is not particularly limited as long as the method is conventionally known, examples of the method include a method of calculating a remaining amount of coating of each precious metal in a catalytic layer of an electrode by using a calibration curve or the like from X-ray fluorescence analysis data and a method of calculating a remaining amount of coating of each precious metal in the catalytic layer of an electrode from an intensity ratio of metal used in a base material of the electrode and each precious metal included in the catalytic layer.

When the electrolyzer 30 is a bipolar electrolyzer, initial data and actual measurement data may be stored for each electrolytic cell 31. In this case, the initial data or the actual measurement data need not include initial data or actual measurement data related to all electrolytic cells 31-1 to 31-N included in the electrolyzer 30 and information related to a part of the electrolytic cells 31-N may include initial data or actual measurement data. As an example, actual measurement data shown in Figure 4A represents an example in which actual measurement data of all electrolytic cells from 31-1 to 31-100 is not measured and actual measurement data of cell 31-1, cell 31-50, and cell 31-100 is measured and stored.

In addition, when the electrolyzer 30 is a bipolar electrolyzer, information related to a position in the electrolyzer 30 of each electrolytic cell may be included. While the information related to a position in the electrolyzer 30 of each electrolytic cell is not particularly limited, for example, the information may be a position of the electrolytic cell as counted from an end such as first from end, second from end, ... from end. As an example, in Figure 4A, the position of each electrolytic cell in the electrolyzer 30 may be stored by being described as cell 31-1, cell 31-50, and cell 31-100 in the actual measurement data. Accordingly, a state of the electrolytic cell 31-N in accordance with the position in the electrolyzer 30 can be specifically stored.

In addition, as repair history, an electrode of an electrolytic cell, timing and details of parts replacement and repair, and the like may be stored for each electrolytic cell.

Although the operation history information of the electrolyzer 30 is not particularly limited, examples of the operation history information include a total operation time of the electrolyzer, a total current flow, a current density, an operation voltage, a current efficiency, an operation temperature, an electrolytic solution, a flow rate of the electrolytic solution supplied to the anode and cathode chambers, information related to a reverse current, number of stops, gas purity, and other known conditions to be controlled or observed during the operation of the electrolytic apparatus 10. Note that gas purity refers to a purity of gas generated and obtained by the cathode or the anode.

The operation history information of the electrolyzer 30 may be recorded over time. As shown in Figure 4B, a current density, an operation voltage, an operation temperature, and other conditions that may vary over time can be stored as information over time. A remaining amount of precious metal coating on an electrode is known to gradually decrease even when a normal operation of the electrolytic apparatus 10 is being performed. Therefore, a decreasing behavior of the remaining amount of precious metal coating on an electrode may be estimated more specifically by recording the operation history information as such information over time.

Furthermore, as shown in Figure 4B, such data of operation history over time may include a stop period or traces related to a reverse current. A reverse current will now be described. The electrolytic cell 31 can produce a self-discharge reaction through a leakage current circuit formed by the electrolytic solution supply pipe when electrolysis is stopped. Since a direction of a current flowing on a current-carrying surface during a self-discharge reaction is opposite to that during electrolysis, the current is called a reverse current. A remaining amount of precious metal coating on an electrode of the electrolytic cell 31 may be extremely affected by a loss of a catalytic layer on the surface of the base material as a result of oxidation-reduction in the process of reverse current generation. Therefore, a decreasing behavior of the remaining amount of precious metal coating on an electrode may be estimated more specifically by recording such information related to a reverse current as the operation history information. In particular, an effect of a decrease in the remaining amount of precious metal coating due to such a reverse current tends to be larger in a cathode 35.

Furthermore, in addition to or in place of the above, a reverse current may also occur when current density is extremely low. Specifically, when a current of a positive electrolysis and a reverse current are compared to each other and the reverse current is larger, the reverse current may be generated. Data of operation history over time may include such traces related to a reverse current.

In addition, information related to an electrolytic solution in the operation history information of the electrolyzer 30 may include information about a type and an amount of impurities in addition to a composition of the electrolytic solution. When impurities are included in the electrolytic solution, the impurities may adhere to an electrode. Impurities that adhere to the electrode also affect operation of the electrolytic apparatus 10 and affect a remaining amount of precious metal coating on the electrode. Therefore, a decreasing behavior of the remaining amount of precious metal coating on an electrode may be estimated more specifically by recording such information related to an electrolytic solution as the operation history information. In particular, an effect of a decrease in the remaining amount of precious metal coating due to such impurities tends to be larger in an anode 33.

### 2.1.2. Remaining amount predicting unit

The remaining amount predicting unit 154 predicts, based on operation history information of an electrolyzer, a remaining amount of precious metal coating on an electrode included in each electrolytic cell. More specifically, the remaining amount predicting unit 154 may execute acquiring operation history information of an electrolyzer from a control unit 70 of the electrolytic apparatus 10, recording the acquired operation history information in electrolyzer data, and predicting a remaining amount of precious metal coating on an electrode included in the present electrolytic cell based on the recorded operation history information. Note that a source from which the remaining amount predicting unit 154 of the apparatus 100 acquires operation history information of the electrolyzer is not limited to the control unit 70 of the electrolytic apparatus 10.

### 2.1.2.1. Decreasing tendency

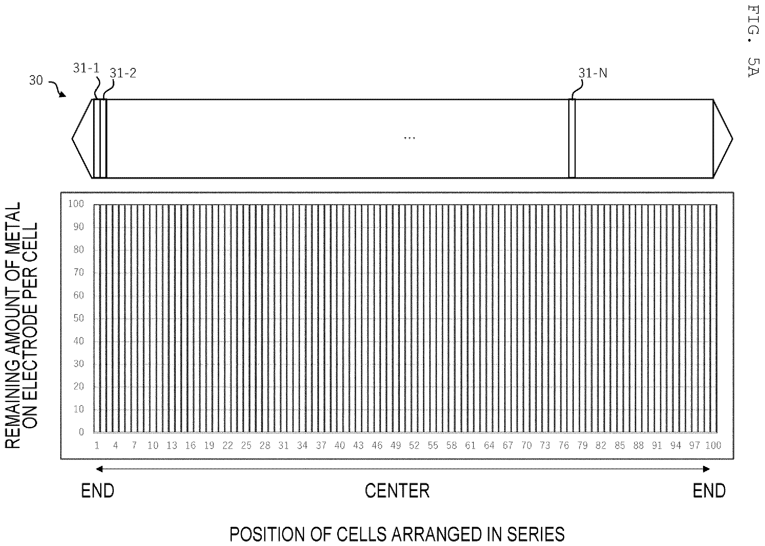

A decreasing tendency of a remaining amount of precious metal coating will be described with reference to Figures 5A to 5E before describing prediction processing to be executed by the remaining amount predicting unit 154.

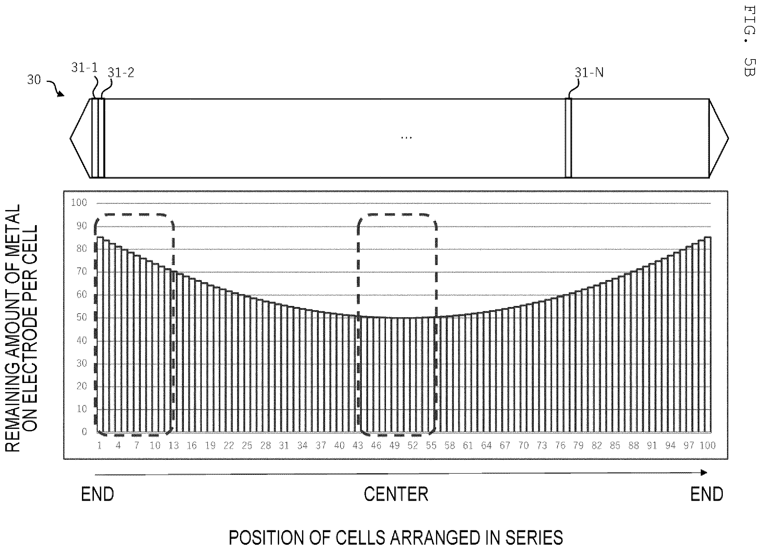

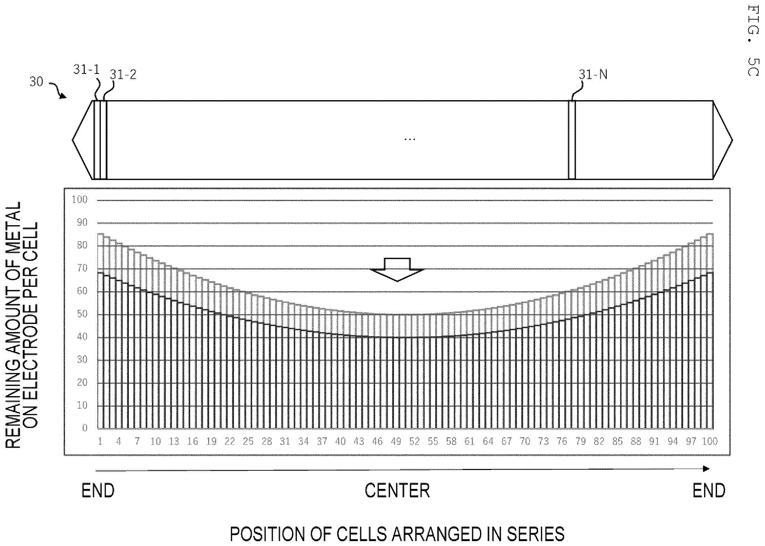

Figures 5A to 5E show a remaining amount of metal on an electrode in each electrolytic cell of a bipolar electrolyzer, with an axis of ordinate indicating a remaining amount of metal and an axis of abscissa indicating a position of the electrode in the bipolar electrolyzer. Figure 5A is a graph showing a remaining amount of metal in an unused electrode before operation as 100%, Figure 5B is a graph showing a remaining amount of metal in the electrode after the electrolytic apparatus 10 has been operated for a predetermined time, and Figure 5C is a graph showing a remaining amount of metal in the electrode after the electrolytic apparatus 10 is further operated from the state shown in Figure 5B.

As shown in Figures 5A to 5C, in all of the electrolytic cells, the remaining amount of precious metal coating tends to gradually decrease with the operation of the electrolytic apparatus 10. Therefore, the remaining amount of precious metal coating on an electrode can be estimated based on operation history information on how long and under what conditions (voltage, current, and the like) the operation was performed.

In addition, as shown in Figures 5A to 5C, in the case of a bipolar electrolyzer, it has been found that the extent of decrease in the remaining amount of precious metal coating varies depending on a location of an electrolytic cell. More specifically, it has been found that electrolytic cells located at a center of the bipolar electrolyzer tend to have a smaller remaining amount of precious metal coating. This is attributable to the fact that a reverse current is more likely to be generated in electrolytic cells located at the center when the electrolytic apparatus 10 is repetitively operated and stopped.

Therefore, an assessment may be made by weighting a degree of decrease of a remaining amount of precious metal coating in accordance with a position of a cell in addition to operation history information on how long and under what conditions (voltage, current, and the like) the operation was performed. More specifically, the remaining amount of precious metal coating may be assessed by adjusting the electrolytic cells located at a center of the bipolar electrolyzer so as to have a larger degree of decrease in the remaining amount of precious metal coating. Accordingly, even when there are a large number of electrolytic cells as in the case of a bipolar electrolyzer, the remaining amounts of precious metal coating on electrodes of the electrolytic cells can be collectively estimated.

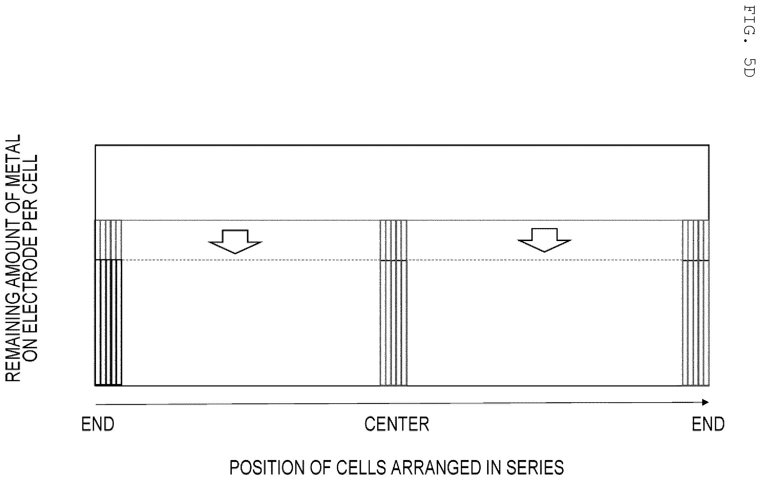

When an electrolytic cell has a reverse current absorber or an electrode has a reverse current absorbing layer, the remaining amount of precious metal coating on the electrolytic cells located at the center of the bipolar electrolyzer and the electrolytic cells located at the ends may be more alleviated (Figure 5D).

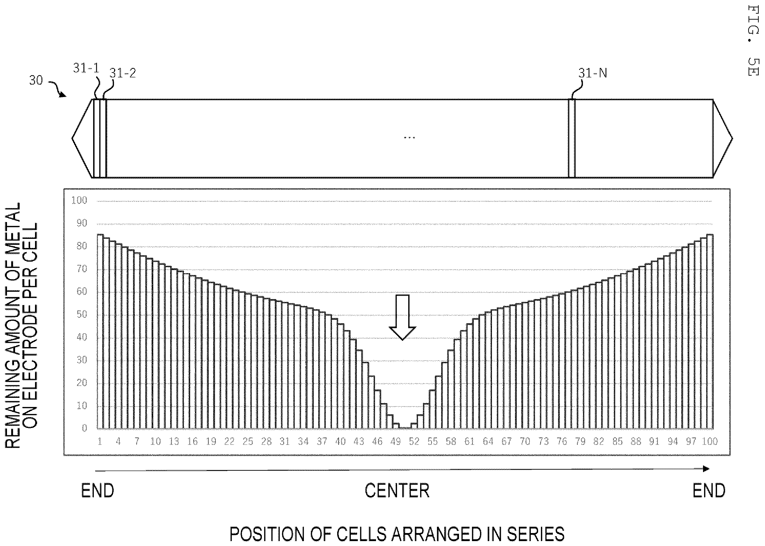

Furthermore, as shown in Figure 5E, when a significant reverse current is generated, the remaining amount of precious metal coating of the electrolytic cell in which the reverse current is generated tends to significantly decrease. Therefore, the remaining amount of precious metal coating of an electrolytic cell can be assessed by taking a reverse current into consideration as one piece of operation history information.

In addition, when an electrode of an electrolytic cell has had its catalytic layer re-coated or the electrode or the electrolytic cell itself has been replaced as the repair history described earlier, a degree of decrease in the remaining amount of precious metal coating with respect to the electrolytic cell may be calculated from a time point at which the repair or replacement was made with the time point being considered 100%. Accordingly, a remaining amount of precious metal coating can be individually assessed even with respect to an electrolytic cell with a repair history.

While Figures 5A to 5E notably show an extent of decrease of a remaining amount of precious metal coating so that the extent of decrease may be readily understood, the decrease in the remaining amount of precious metal coating according to the present embodiment is not limited thereto.

### 2.1.2.2. Prediction processing

Although the prediction processing to be executed by the remaining amount predicting unit 154 is not particularly limited, examples of the prediction processing include a method of using a formula for calculating a remaining amount of precious metal coating on an electrode with values included in the operation history information as variables. More specifically, examples of the formula for calculating a remaining amount of precious metal coating on an electrode include a formula that uses a value indicating a total amount of operation such as a total operation time or a total current flow as a variable and a formula that uses a value indicating conditions during a steady-state operation such as an operation voltage, an operation temperature, a current density, and a type of electrolytic solution as a variable.

Such a formula may be obtained as a trained model generated by machine learning processing based on training data that includes information related to an operation history and information related to a remaining amount of precious metal coating on an electrode included in each electrolytic cell in a bipolar electrolyzer that has gone through the operation history. In other words, the remaining amount predicting unit 154 may perform a prediction of a remaining amount of precious metal coating using a trained model generated by machine learning processing based on training data that includes information related to an operation history and information related to a remaining amount of precious metal coating on an electrode included in each electrolytic cell in a bipolar electrolyzer that has gone through the operation history. Note that training data and generation of a trained model will be described later.

In addition, as shown in Figures 5A to 5D, in the case of a bipolar electrolyzer, a degree of decrease in the remaining amount of precious metal coating can vary depending on a location of an electrolytic cell even if operation conditions are the same. In consideration thereof, the remaining amount predicting unit 154 may predict, based on operation history information of an electrolyzer and data of an actual measurement of a remaining amount of precious metal coating on an electrode included in a part of electrolytic cells, a remaining amount of precious metal coating on an electrode included in another electrolytic cell.

More specifically, by obtaining actual measurement data in an electrolytic cell at any position in a bipolar electrolyzer such as those enclosed by dashed-line squares in Figure 5B, what kind of decrease curve the remaining amount of precious metal coating shows from an end to a center can be estimated and a weight of the degree of decrease of the remaining amount of precious metal coating according to the cell position may be adjusted based on an estimated decrease curve. In this case, as shown in Figures 5B and 5C, a decrease curve refers to a curve that indicates a tendency for a larger remaining amount of precious metal coating closer to the end and a smaller remaining amount of precious metal coating closer to the center.

Note that Figure 5B shows electrolytic cells positioned at an end and at the center of a bipolar electrolyzer by enclosing the electrolytic cells with dashed-line squares as electrolytic cells of which actual measurement data is to be acquired and shows that the actual measurement data considered by the remaining amount predicting unit 154 includes actual measurement data of the remaining amount of precious metal coating on electrodes included in the electrolytic cells positioned at the end and at the center of the electrolyzer.

Accordingly, even when there are a large number of electrolytic cells as in the case of a bipolar electrolyzer, the remaining amounts of precious metal coating on an electrode of the electrolytic cells can be collectively estimated with higher accuracy. In particular, by referring to the actual measurement data of some electrolytic cells, prediction accuracy of the remaining amount of precious metal coating on an electrode of other electrolytic cells that do not have actual measurement data can be improved.

However, estimation of a decrease curve is not limited to the above and a decrease curve can be estimated as long as actual measurement data of electrolytic cells of at least any two locations is available. More specifically, as long as it is known that a decrease curve will be obtained, when the actual measurement data of electrolytic cells of any two locations is available, a decrease curve that satisfies the remaining amounts of precious metal coating actually measured in the electrolytic cells of the two locations can be fitted. In addition, while a plurality of electrolytic cells are collectively enclosed by dashed-line squares in Figure 5B, the fitting of a decrease curve is not limited thereto and a decrease curve can be fitted as long as there are two locations where actual measurement data of at least one electrolytic cell is available.

Note that actual measurement data may include X-ray fluorescence analysis data, inductively-coupled plasma emission analysis data, X-ray diffraction data, or X-ray photoelectron spectroscopy analysis data of an electrode included in an electrolytic cell. The actual measurement data may be data acquired from the input/output interface 130 of an X-ray fluorescence spectrometer or the like and may include X-ray fluorescence analysis data, inductively-coupled plasma emission analysis data, X-ray diffraction data, or X-ray photoelectron spectroscopy analysis data of the electrode included in the electrolytic cell.

The remaining amount predicting unit 154 may predict, based on operation history information including information related to a reverse current, a remaining amount of precious metal coating on a cathode. Accordingly, a remaining amount of precious metal coating can be predicted while taking into consideration a decline in the remaining amount of precious metal coating on the cathode due to the generation of a reverse current as shown in Figure 5E.

The remaining amount predicting unit 154 may predict, based on operation history information including information related to impurities of an electrolytic solution, a remaining amount of precious metal coating on an anode. When impurities are included in the electrolytic solution, the impurities may adhere to an electrode. Impurities that adhere to the electrode also affect operation of the electrolytic apparatus 10 and affect a remaining amount of precious metal coating on the electrode. Although a mechanism thereof is not particularly limited, for example, due to adhesion of impurities to a surface of an electrode causing progress of electrolysis to be inhibited at the portions where the impurities have adhered while causing current to concentrate on portions where the impurities have not adhered, conceivably, coating partially decreases. While such a decrease due to impurities possibly occurs at both the anode and the cathode, in particular, an effect of a decrease in the remaining amount of precious metal coating due to impurities tends to be larger in the anode 33. Therefore, a remaining amount of precious metal coating on an electrode can be predicted by recording such information related to an electrolytic solution as the operation history information.

Although a mode of a remaining amount of precious metal coating predicted by the remaining amount predicting unit 154 is not particularly limited, for example, as shown in Figures 5A to 5E, the remaining amount of precious metal coating of each electrolytic cell included in the electrolyzer may be individually outputted, an average remaining amount of precious metal coating on respective electrodes included in the electrolytic cell 31 included in the electrolyzer 30 may be outputted, or a total remaining amount of precious metal coating on all electrodes may be outputted. Alternatively, these outputs may be combined.

By having the remaining amount predicting unit 154 individually output the remaining amount of precious metal coating in each electrolytic cell, the remaining amount predicting unit 154 can estimate for each electrolytic cell 31 whether the electrolytic cell can be reused, whether the electrolytic cell needs to be repaired or replaced, or the amount of precious metal that can be recovered from an electrode. In addition, by having the remaining amount predicting unit 154 output the average remaining amount of precious metal coating on the respective electrodes or a total remaining amount of precious metal coating on all electrodes, the remaining amount predicting unit 154 can estimate whether the entire electrolyzer 30 can be reused or needs to be at least partially repaired or replaced, or a total amount of precious metals that can be recovered from the electrodes.

Furthermore, the remaining amount predicting unit 154 may predict a remaining amount of precious metal coating for the anode and the cathode, respectively. While there may be cases where a decreasing tendency of the remaining amount of precious metal coating is not consistent between the anode and the cathode as described above, respectively predicting the remaining amount of precious metal coating for the anode and the cathode enables an amount of precious metals to be estimated more appropriately.

In addition, a remaining amount of precious metal coating predicted by the remaining amount predicting unit 154 may include a remaining amount of coating of a precious metal selected from the group consisting of ruthenium, rhodium, palladium, osmium, iridium, and platinum. Since these metals serve as primary active species in a catalytic layer of an electrode, it is useful to assess a remaining amount of such rare metals in a non-invasive manner.

### 2.1.3. Model

The learning unit 156 may perform machine learning processing based on training data 155 that includes information related to an operation history and information related to a remaining amount of precious metal coating on an electrode included in each electrolytic cell in an electrolyzer that has gone through the operation history and may obtain a trained model. The trained model obtained in this manner may receive information related to the operating history as input and output information related to the remaining amount of precious metal coating on an electrode included in each electrolytic cell in the electrolyzer that has gone through the operation history.

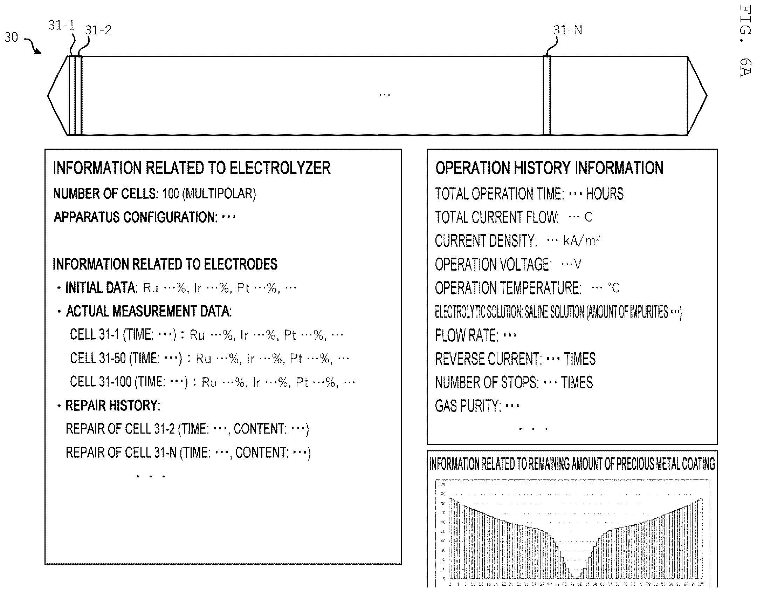

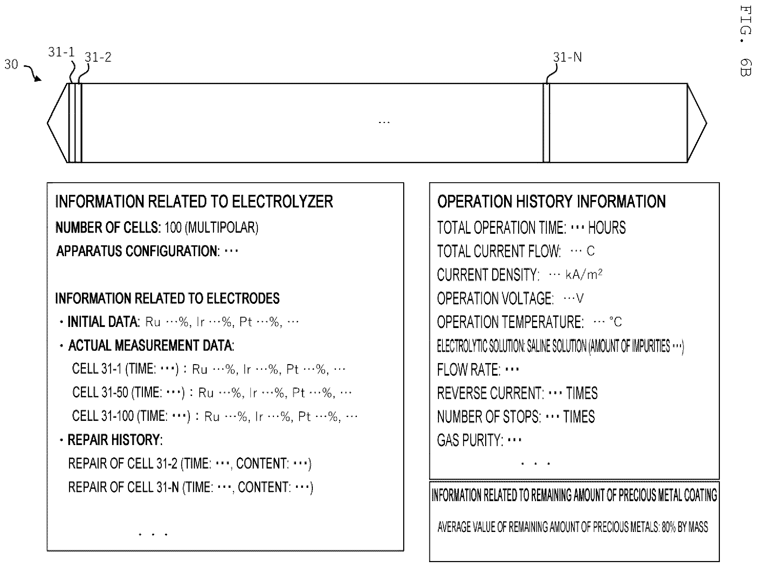

For example, the training data 155 may store, for each electrolyzer, information related to the electrolyzer 30, operation history information of the electrolyzer 30, or information related to the remaining amount of precious metal coating of the electrolyzer 30. The training data 155 stored in the storage 150 will be described with reference to Figures 6A and 6B.

The information related to the electrolyzer 30 and the operation history information of the electrolyzer 30 stored in the training data 155 may be similar to the information described with respect to the electrolyzer data 153.

In addition, as information related to the remaining amount of precious metal coating of the electrolyzer 30, information related to an actual remaining amount of precious metal coating of the electrolyzer 30 may be stored. As shown in Figure 6A, specific examples include information summarizing actual measurement data of the remaining amount of precious metal coating of each electrolytic cell. Furthermore, as described in Figure 6B, actual measurement data of an average value of the remaining amount of precious metal coating of respective electrolytic cells may be stored in place of or in addition to the above.

The learning unit 156 may perform machine learning using information related to an operation history and information related to a remaining amount of precious metal coating on an electrode included in each electrolytic cell in an electrolyzer that has gone through the operation history as training data and information related to a remaining amount of precious metal coating as a correct label and may construct a model.

Furthermore, the learning unit 156 may construct a model other than a machine learning model. Examples of such models include a model that includes a value indicating a total amount of operation such as a total operation time or a total current flow as a variable and a model that includes a value indicating conditions during a steady-state operation such as an operation voltage, an operation temperature, a current density, and a type of electrolytic solution as a variable. Coefficients of such variables may be determined based on the training data 155.

### 2.1.4. Assessing unit

The assessing unit 157 may assess a value of recovering precious metals based on a predicted remaining amount of precious metal coating and a cost of recovering precious metals from an electrode. The assessment of the value of recovering precious metals by the assessing unit 157 may be an assessment in a case where precious metals are recovered from all electrolytic cells included in the electrolyzer or an assessment in a case where precious metals are recovered for each electrolytic cell included in the electrolyzer.

While contents of assessment outputted by the assessing unit 157 are not particularly limited, examples of contents include an assessment that an electrode is to be discarded without recovering precious metals since the electrode needs to be updated but the remaining amount of precious metals is too small, an assessment that precious metals are to be recovered from an electrode since the electrode needs to be updated and the remaining amount of precious metals justifies recovery cost, and an assessment that operating the electrolytic apparatus using an electrode in the present state is more advantageous in terms of cost than updating the electrode or, in other words, an assessment that the electrode is not to be updated.

In addition, the assessments described above may be combined. For example, by assessing the value of recovering precious metals for each electrolytic cell included in the electrolyzer, an assessment that the electrolytic apparatus is to be operated by replacing only the electrodes in a central electrolytic cell of a bipolar electrolyzer may be made. In addition, an assessment that precious metals are to be recovered only from electrodes of an electrolytic cell at an end of a bipolar electrolyzer and other electrodes are to be discarded may be made. Furthermore, when making such assessments, the assessing unit 157 may specifically specify a number of the electrolytic cell to be discarded or the electrolytic cell from which precious metals are to be recovered. Moreover, a result of the assessment by the assessing unit may be controlled to be displayed on a display or the like.

A specific aspect of the apparatus according to the present embodiment may include: a remaining amount predicting unit that individually predicts, based on operation history information of an electrolyzer including a plurality of electrolytic cells including information related to a reverse current and information related to an impurity of an electrolytic solution, a remaining amount of precious metal coating on an electrode included in the electrolytic cells; and an assessing unit that assesses a value of recovering precious metals for each electrolytic cell based on the remaining amount of precious metal coating, wherein the assessing unit may specify an electrolytic cell that is an object to be discarded or an object from which precious metals are to be recovered and display the assessment result.

### 2.1.5. Operation suggesting unit

The operation suggesting unit 158 may suggest an operation condition of the electrolyzer 30. Specifically, the operation suggesting unit 158 can suggest an operation condition for causing current efficiency to increase based on a remaining amount of precious metal coating.

In the electrolyzer 30, a transfer of ions in an electrolytic solution, an exchange of electrons on electrode surfaces, and a resulting generation of substances occur. However, substances involved in the electrolytic reaction are not limited to a target substance. In consideration thereof, current efficiency related to the target substance is desirably increased. The "current efficiency" in the electrolyzer 30 is a ratio of an amount of substance actually produced to a theoretical maximum amount of substances to be produced by a given amount of electricity in the electrolyzer.

In the present embodiment, for example, target substances are chlorine gas, hydrogen gas, and sodium hydroxide in a case of saline water electrolysis and oxygen gas and hydrogen gas in a case of alkaline water electrolysis. A high current efficiency means that a large portion of the amount of electricity used is used to generate the target substance such as chlorine gas and hydrogen gas.

The operation condition of the electrolyzer 30 desirably enables a desired electrolytic reaction to be performed at as high a current efficiency as possible. To this end, while various condition settings are desirably adjusted, as one perspective, the operation suggesting unit 158 may suggest an operation condition including a voltage condition and a flow rate condition of an electrolytic solution based on a remaining amount of precious metal coating. Note that the operation condition is not limited thereto and may include other conditions such as a concentration and a temperature condition of the electrolytic solution.

The remaining amount of precious metal coating is a value that reflects an amount of active species on an electrode. In addition, the voltage condition is a value that controls an amount of current flowing between electrodes. Furthermore, the flow rate condition of an electrolytic solution is a value that controls an amount of existing ions that exchange electrons with an electrode and a contact efficiency between the electrolytic solution and the electrode. When an amount of active species on an electrode differs, an appropriate value of other operation conditions can differ. In other words, based on the remaining amount of precious metal coating, the operation suggesting unit 158 can suggest at least a voltage condition and a flow rate condition of the electrolytic solution as an operating condition that enables a transfer of ions in the electrolytic solution and the exchange of electrons on the electrode surface to proceed more appropriately and the current efficiency to increase.

Accordingly, instead of operating the electrolyzer 30 under constant operation conditions, the electrolyzer 30 can be operated under operation conditions that increases current efficiency according to a fluctuation in the remaining amount of precious metal coating. As a result, due to the control unit 70 of the electrolyzer 30 adopting the operation condition suggested by the operation suggesting unit 158, the current efficiency of the electrolyzer 30 can be maintained at a high level and yield can be further increased from a long-term perspective.

In addition, maintaining the current efficiency of the electrolyzer 30 achieved by the operation suggesting unit 158 is also related to prolonging the lifetime of the electrolyzer 30. As shown in Figure 1, since the electrolyzer 30 is a huge apparatus, repair factors gradually accumulate at various locations and at various timings. In the present embodiment, a "repair factor" refers to a factor which does not require immediate repair but nevertheless leads to a decline in performance such as a deterioration of a partition wall or a drop in a remaining amount of precious metal coating. When a certain amount of repair factors accumulates, the operation of the electrolyzer 30 is stopped, repair work is performed, and the operation is restarted. However, since the electrolyzer 30 is a huge apparatus and a stop operation for repair and an operation restart operation are time-consuming, the number of stops is kept as small as possible in order to maximize operation efficiency of the electrolyzer 30 and the number of stops is also kept as small as possible in terms of affecting a remaining amount of precious metal coating due to the reverse current described above.

In other words, when stopping operation for repair work, as many repairs as possible are desirably executed in a single shutdown. In other words, the electrolyzer 30 is preferably operated by prolonging its lifetime so that as many repair factors as possible can be accumulated without being repaired. Obviously, such an accumulation of repair factors is premised on safety being guaranteed. In addition, against such a background, the maintenance of the current efficiency of the electrolyzer 30 achieved by the operation suggesting unit 158 contributes to operating the electrolyzer 30 by prolonging the lifetime thereof so that repair factors can be accumulated without being repaired.

### 2.1.6. Stop suggesting unit

The stop suggesting unit 159 may suggest a stop condition of the electrolyzer 30. Specifically, the stop suggesting unit 159 can suggest, based on a remaining amount of precious metal coating, a stop condition that makes it difficult to reduce the remaining amount of precious metal coating.

As described earlier, the remaining amount of precious metal coating on an electrode of the electrolytic cell 31 may be extremely affected by a loss of a catalytic layer on the surface of the base material or the like as a result of oxidation-reduction in the process of reverse current generation. The reverse current is produced by a self-discharge reaction through a leakage current circuit formed by the electrolytic solution supply pipe when electrolysis is stopped.

Therefore, as the stop condition of the electrolyzer 30, desirably, the reverse current is reduced and a decrease in precious metal coating is suppressed. To this end, as a perspective, the stop suggesting unit 159 may suggest a current attenuation condition where voltage is gradually reduced to gradually attenuate a current flowing in the electrolyzer 30 and subsequently setting the voltage applied to the electrolyzer 30 to 0 V instead of abruptly changing the voltage applied to the electrolyzer 30 to 0 V. Accordingly, setting the voltage to 0 V after gradually reducing the voltage enables the reverse current due to a self-discharge reaction to be more reduced as compared to abruptly changing the voltage applied to the electrolyzer 30 from a high voltage to 0 V.

In addition, when a reverse current is generated, a reaction in which generated chlorine gas and the like are decomposed in contrast to the electrolytic reaction can occur. Therefore, as another perspective of suppressing a reverse current, the stop suggesting unit 159 may suggest, as a stop condition, an increase condition for a flow rate of an electrolytic solution supplied to the anode chamber 10 and the cathode chamber 20 in order to quickly drive out the chlorine gas and the like involved in the reverse current reaction from the anode chamber 10 and the cathode chamber 20. The higher the flow rate of the electrolytic solution supplied to the anode chamber 10 and the cathode chamber 20, the more the product gases produced at the electrodes will flow downstream. Accordingly, the reverse current can be suppressed compared to when the voltage is set to 0 V in a state where a greater amount of product gas is mixed in the electrolytic solution in the anode chamber 10 and the cathode chamber 20.

Furthermore, the stop suggesting unit 159 can suggest an attenuation condition of the current described above and an increase condition of a flow rate of the electrolytic solution described above based on the remaining amount of precious metal coating. Specifically, in consideration of the fact that a reverse current is more readily generated and a remaining amount of precious metal coating is smaller in a central portion, the stop suggesting unit 159 may suggest an attenuation condition of a current in accordance with a portion in which the remaining amount of precious metal coating is small. In addition, in a similar manner, in consideration of the fact that a reverse current is more readily generated in a central portion, the stop suggesting unit 159 may set the increase condition so that the flow rate of the electrolytic solution is increased in accordance with a portion in which the remaining amount of precious metal coating is small.

A typical example where a reverse current tends to occur in the center portion had been described above as an example. However, a reverse current need not necessarily be more likely to occur in the central portion, and the portion where reverse current is more likely to occur may vary according to the specifications of the electrolyzer 30. The stop suggesting unit 159 can estimate a portion where a reverse current is more likely to occur based on a distribution of the remaining amount of precious metal coating.

Accordingly, the operation of the electrolyzer 30 can be stopped by a stop condition that is less likely to generate a reverse current. As a result, due to the control unit 70 of the electrolyzer 30 adopting the stop condition suggested by the stop suggesting unit 159, the current efficiency of the electrolyzer 30 can be maintained at a high level and yield can be further increased from a long-term perspective.

In addition, suppressing the reverse current achieved by the stop suggesting unit 159 is also related to prolonging the lifetime of the electrolyzer 30. The electrolyzer 30 is a huge apparatus as described above and, as shown in Figures 5A to 5C, in the case of a bipolar electrolyzer, a difference in the extent of decrease in the remaining amount of precious metal coating depending on a location of the electrolytic cell 90 is likely to occur. Although such differences in the remaining amount of precious metal coating can be tolerated to some extent, if the differences increases and the remaining amount of precious metal coating in some of the electrolytic cells 90 becomes smaller by a predetermined value or more, operation must be stopped and repairs must be made to that part of the electrolytic cell. However, even if some of the electrolytic cells 90 of which the remaining amount of precious metal coating had become smaller by a predetermined value or more are partially repaired and operation is resumed, it may be necessary to stop operation again before long to repair the other electrolytic cells 90 because the remaining amounts of precious metal coating of the other electrolytic cells 90 have also decreased to a considerable degree. Since such a repetition would result in a greater number of stops, the difference in the extents of decrease in the remaining amount of precious metal coating due to the location of an electrolytic cell is preferably smaller.

Against such a background, the suppression of a reverse current achieved by the stop suggesting unit 159 contributes to making an extent of decrease in the remaining amount of precious metal coating due to a location of the electrolytic cell 90 more uniform, avoiding a situation where only some electrodes are repaired, and operating the electrolyzer 30 by prolonging the lifetime of the electrolyzer 30.

Furthermore, the stop suggesting unit 159 may suggest a stop condition based on a difference in the configuration of the electrolyzer 30. Each electrolyzer 30 is expected to differ in size, electrical system specifications, electrolytic solution pumping specifications, and the like. Therefore, the stop suggesting unit 159 can more effectively suppress a reverse current by suggesting a stop condition that takes such differences into consideration.

### 2.1.7. Position change suggesting unit

When the electrolyzer 30 includes a plurality of electrolytic cells 90, the position change suggesting unit 161 may suggest, based on the remaining amount of precious metal coating, a change in a position in the electrolyzer of the electrolytic cell 90 of which the remaining amount of precious metal coating is relatively high and the electrolytic cell 90 of which the remaining amount of precious metal coating is relatively low.

Specifically, in the case of a bipolar electrolyzer, the remaining amount of precious metal coating of the electrolytic cell 90 can differ depending on a position. In such a case, as described above, even if some of the electrolytic cells 90 of which the remaining amount of precious metal coating had become smaller by a predetermined value or more are partially repaired and operation is resumed, it may be necessary to stop operation again before long to repair the other electrolytic cells 90 because the remaining amounts of precious metal coating of the other electrolytic cells 90 have also decreased to a considerable degree.

By comparison, when positions in the electrolyzer of the electrolytic cell 90 (hereinafter, referred to as a "first cell") of which the remaining amount of precious metal coating is relatively high and the electrolytic cell 90 (hereinafter, referred to as a "second cell") of which the remaining amount of precious metal coating is relatively low are swapped, the first cell is to be arranged at a position where the remaining amount of precious metal coating readily decreases and the second cell is to be arranged at a position where the remaining amount of precious metal coating does not readily decrease. Resuming operation in this arrangement enables the difference in the remaining amounts of precious metal coating between the first cell and the second cell to be resolved.

In the case of a bipolar electrolyzer, there are a plurality of electrolytic cells 90 with different remaining amounts of precious metal coating. Therefore, by having the position change suggesting unit 161 suggest a combination of the first cell and the second cell to be swapped based on the extents of decrease or, in other words, the remaining amounts of precious metal coating, a difference in the remaining amounts of precious metal coating can be resolved in the electrolyzer 30 as a whole and the remaining amounts of precious metal coating can be kept more uniform.

By maintaining uniformity in the remaining amounts of precious metal coating, as described above with respect to the stop suggesting unit 159, the position change suggesting unit 161 avoids a situation where only some electrodes are repaired and contributes toward operating the electrolyzer 30 by prolonging a lifetime of the electrolyzer 30.

### 2.2. Operation processing

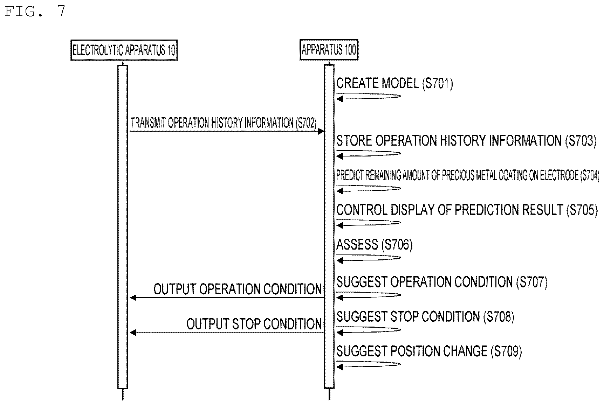

Next, an operation of the apparatus according to the present embodiment will be described. Figure 7 is a sequence diagram showing an example of processing executed by the apparatus according to the present embodiment.

In step S701, the learning unit 156 of the apparatus 100 may perform machine learning processing based on training data 155 that includes information related to an operation history and information related to a remaining amount of precious metal coating on an electrode included in each electrolytic cell in an electrolyzer that has gone through the operation history and may obtain a trained model.

In steps S702 and S703, the remaining amount predicting unit 154 of the apparatus 100 acquires operation history information of an electrolyzer including one or more electrolytic cells and stores the operation history information in the electrolyzer data 153. Subsequently, in step S704, the remaining amount predicting unit 154 of the apparatus 100 predicts, based on the operation history information of the electrolyzer including one or more electrolytic cells, a remaining amount of precious metal coating on an electrode included in each electrolytic cell.

In step S705, the remaining amount predicting unit 154 of the apparatus 100 may control display of a prediction result of a remaining amount of precious metal coating on an electrode on a display or the like. In addition, in step S706, the assessing unit 157 of the apparatus 100 executes processing of assessing a value of recovering precious metals based on a predicted remaining amount of precious metal coating and a cost of recovering precious metals from an electrode.

In step S707, the operation suggesting unit 158 of the apparatus 100 may suggest an operation condition for causing current efficiency to increase based on a remaining amount of precious metal coating and control display of the operation condition on a display or the like. Alternatively, the operation suggesting unit 158 may output the operation condition to the control unit 70.

In step S708, the stop suggesting unit 159 of the apparatus 100 may suggest, based on the remaining amount of precious metal coating, the stop condition that makes it difficult to reduce the remaining amount of precious metal coating, and control display of the stop condition on a display or the like. Alternatively, the stop suggesting unit 159 may output the stop condition to the control unit 70.

In step S709, the position change suggesting unit 161 of the apparatus 100 may suggest, based on a remaining amount of metal coating, a change in a position in the electrolyzer of the electrolytic cell of which the remaining amount of precious metal coating is relatively high and the electrolytic cell of which the remaining amount of precious metal coating is relatively low and control display of the position changes on a display or the like.

While steps S707 to S709 are described in an order of S707, S708, and S709 for the sake of convenience in Figure 7, the processing steps are independent and there is no significance to the order as long as the steps are executed after S704. The order of the steps can be changed in any way or the steps can be executed in parallel.

As described above, the present disclosure is not limited to the embodiment described above and various modifications can be made without deviating from the gist of the disclosure. In other words, the embodiment described above is merely illustrative in all aspects and is not to be construed as limiting. For example, the various processing steps described above can be optionally reordered insofar as no contradictions arise in processing contents thereof or the processing steps can be executed in parallel.

The program according to the present embodiment may be provided in a state of being stored in a computer-readable storage medium. In this case, as the storage medium, the program can be stored in a "non-transitory tangible medium". By way of example and not limitation, the program includes software programs and computer programs.

### Reference Signs List

1 ... elastic mat, 2 ... ion exchange membrane, 10 ... anode chamber, 19 ... bottom part, 20 ... cathode chamber, 29 ... partition wall, 11 ... anode, 21 ... cathode, 23 ... current collector, 24 ... support body, 30 ... electrolyzer, 51 ... anode-side gasket, 90 ... electrolytic cell, 500 ... press machine, 600 ... cathode terminal, 700 ... anode terminal, 70 ... control unit, 100 ... apparatus, 110 **...** processor, 120 **...** communication interface, 130 ... input/output interface, 140 ... memory, 150 ... storage, 151 ... operating system, 152 ... network communicating unit, 153 ... electrolyzer data, 154 ... assessing unit, 154 ... remaining amount predicting unit, 155 ... training data, 156 ... learning unit, 157 ... assessing unit, 160 ... communication bus

## Claims

1. An apparatus, comprising:
a remaining amount predicting unit that predicts, based on operation history information of an electrolyzer including one or more electrolytic cells, a remaining amount of precious metal coating on an electrode included in the electrolytic cells.

2. The apparatus according to claim 1, wherein
the remaining amount of precious metal coating includes a remaining amount of coating of a precious metal selected from the group consisting of ruthenium, rhodium, palladium, osmium, iridium, and platinum.

3. The apparatus according to claim 1, wherein
the remaining amount predicting unit predicts the remaining amount of precious metal coating on the electrode included in the individual electrolytic cell, an average remaining amount of precious metal coating on respective electrodes included in the electrolytic cell included in the electrolyzer, and/or a total remaining amount of precious metal coating on all electrodes.

4. The apparatus according to claim 1, wherein
the remaining amount predicting unit predicts, based on the operation history information of the electrolyzer and data of an actual measurement of the remaining amount of precious metal coating on the electrode included in a part of the electrolytic cells, the remaining amount of precious metal coating on the electrode included in another of the electrolytic cells.

5. The apparatus according to 4, wherein
the actual measurement data includes at least actual measurement data of the remaining amount of precious metal coating on the electrode included in the electrolytic cells positioned at an end and in a central part of the electrolyzer.

6. The apparatus according to claim 4, wherein
the actual measurement data includes X-ray fluorescence analysis data, inductively-coupled plasma emission analysis data, X-ray diffraction data, or X-ray photoelectron spectroscopy analysis data of the electrode included in the electrolytic cell.

7. The apparatus according to claim 1, wherein
the operation history information includes information related to a reverse current, and
the remaining amount predicting unit predicts the remaining amount of precious metal coating on a cathode based on the operation history information.

8. The apparatus according to claim 1, wherein
the operation history information includes information related to an impurity of an electrolytic solution, and
the remaining amount predicting unit predicts the remaining amount of precious metal coating on an anode based on the operation history information.

9. The apparatus according to claim 1, wherein
the remaining amount predicting unit performs a prediction of the remaining amount of precious metal coating using a trained model generated by machine learning processing based on training data that includes information related to an operation history and information related to a remaining amount of precious metal coating on an electrode included in each electrolytic cell in an electrolyzer that has gone through the operation history.

10. The apparatus according to claim 1, further comprising
an assessing unit that assesses a value of recovering precious metals based on the predicted remaining amount of precious metal coating and a cost of recovering precious metals from the electrode.

11. The apparatus according to claim 1, further comprising
an operation suggesting unit that suggests an operation condition of the electrolyzer, wherein
the operation suggesting unit suggests the operation condition for causing current efficiency to increase based on the remaining amount of precious metal coating, and
the operation condition includes a voltage condition and a flow rate condition of the electrolytic solution.

12. The apparatus according to claim 1, further comprising
a stop suggesting unit that suggests a stop condition of the electrolyzer, wherein
the stop suggesting unit suggests, based on the remaining amount of precious metal coating, the stop condition that makes it difficult to reduce the remaining amount of precious metal coating, and
the stop condition includes an attenuation condition of a current and/or an increase condition of a flow rate of an electrolytic solution.

13. The apparatus according to claim 1, wherein
the electrolyzer includes a plurality of the electrolytic cells, and the apparatus further comprises
a position change suggesting unit that suggests, based on the remaining amount of precious metal coating, a change in a position in the electrolyzer of the electrolytic cell of which the remaining amount of precious metal coating is relatively high and the electrolytic cell of which the remaining amount of precious metal coating is relatively low.

14. An apparatus, comprising:
a remaining amount predicting unit that individually predicts, based on operation history information of an electrolyzer including a plurality of electrolytic cells including information related to a reverse current and information related to an impurity of an electrolytic solution, a remaining amount of precious metal coating on an electrode included in the electrolytic cells; and
an assessing unit that assesses a value of recovering precious metals for each electrolytic cell based on the remaining amount of precious metal coating, wherein
the assessing unit specifies an electrolytic cell that is an object to be discarded or an object from which precious metals are to be recovered and displays the assessment result.

15. A method, in which an apparatus
executes, based on operation history information of an electrolyzer including one or more electrolytic cells, processing of predicting a remaining amount of precious metal coating on an electrode included in the electrolytic cells.

16. A program, causing an apparatus to
execute, based on operation history information of an electrolyzer including one or more electrolytic cells, processing of predicting a remaining amount of precious metal coating on an electrode included in the electrolytic cells.
